# EUROPÄISCHE PATENTSCHRIFT

(11) **EP 2 115 286 B1**
(45) Veröffentlichungstag und Bekanntmachung des Hinweises auf die Patenterteilung: **10.11.2010**
(21) Anmeldenummer: 08708557.7
(22) Anmeldetag: 01.02.2008
(51) Int. Cl.: F02D 9/10, F02B 31/08

(54) **SAUGROHRANLAGE FÜR EINE BRENNKRAFTMASCHINE**
INTAKE MANIFOLD SYSTEM FOR AN INTERNAL COMBUSTION ENGINE
SYSTÈME COLLECTEUR D'ADMISSION POUR MOTEUR À COMBUSTION INTERNE

(30) Priorität: 05.02.2007 DE 102007005686
(43) Veröffentlichungstag der Anmeldung: 11.11.2009
(73) Patentinhaber: Mahle International GmbH, 70376 Stuttgart (DE)
(72) Erfinder: GSCHOSSMANN, Hans, 93092 Barbing (DE); RIEPL, Toni, 93342 Saal A. D. Donau (DE); TETTENBORN, Frank, 93096 Köfering (DE)
(74) Vertreter: BRP Renaud & Partner
(86) Internationale Anmeldenummer: PCT/EP2008/051248
(87) Internationale Veröffentlichungsnummer: WO 2008/095867

(56) Entgegenhaltungen:
- EP-A- 1 388 657
- EP-A- 1 744 047
- DE-B3-102004 009 502
- FR-A- 2 875 272

## Beschreibung

Die Erfindung betrifft eine Saugrohranlage für eine Brennkraftmaschine gemäß den Merkmalen des Oberbegriffs des Patentanspruchs 1.

In einer Saugrohranlage einer Brennkraftmaschine ist in jedem Ansaugrohr mindestens eine Drallklappe senkrecht zum Anströmquerschnitt des Saugrohrs drehbar angeordnet. Diese Drallklappe reguliert auf diese Weise die einem Zylinder zugeführte Verbrennungsluft. Die Drallklappen sind dabei in einem luftdichten Gehäuse angebracht und können mittels an einer Koppelstange befestigter Anlenkhebel über einen Aktor angesteuert werden.

Aus Zeit- und Kostengesichtspunkten existiert insbesondere bei den Automobilherstellern das Bestreben, den Zusammenbau der Drallklappen möglichst einfach zu gestalten.

Aus der Druckschrift DE 197 097 599 A1 ist eine Drosselklappe bekannt, die mittels einer Schraubverbindung an einer Stellvorrichtung befestigt ist. Der Zusammenbau der drei Komponenten, Drosselklappe, Schraubverbindung und Stellvorrichtung, im Zuge einer Vormontage ist daher relativ zeitaufwändig.

Aus der DE 10 2004 009 502 B3 ist ein Klappensystem für eine Brennkraftmaschine bekannt, bei dem Klappenmodule mittels steckbarer Hohlwellen realisiert sind.

Aus der DE 102 36 587 A1 ist eine Klappenanordnung bekannt, bei der eine Schaltwelle mit einem Versatzausgleichselement ausgestattet ist.

Die der vorliegenden Erfindung zu Grunde liegende Aufgabe besteht nun darin, die Komponenten für eine gemäß den Merkmalen des Oberbegriffs des Anspruchs 1 ausgebildete Saugrohranlage so zu gestalten, dass der Zusammenbau wesentlich einfacher ausgeführt werden kann, und die Anzahl der Komponenten, die zum Zusammenbau einer Drallklappe benötigt werden, reduziert wird.

Diese Aufgabe wird erfindungsgemäß durch die Merkmale des Patentanspruchs 1 gelöst. Vorteilhafte Ausgestaltungen der Erfindung sind in den Unteransprüchen gekennzeichnet.

Die mit der Erfindung erzielten Vorteile bestehen insbesondere darin, dass auf Grund der einfachen Vormontage der Drallklappen-Stellvorrichtung und der reduzierten Komponentenanzahl ein zeit- und kostensparender Zusammenbau der Saugrohranlage möglich wird.

Eine weitere vorteilhafte Ausgestaltung der Erfindung ist es, dass durch einen Ansatz an der Drallklappe gleichzeitig sichergestellt wird, dass die Drallklappe richtig eingebaut wird, und eine axiale Fixierung der Drallklappe gewährleistet ist. Durch den Ansatz an der Drallklappe verringert sich somit die Wahrscheinlichkeit eines fehlerhaften Zusammenbaus der Drallklappe.

Einzelheiten der Erfindung werden anhand der Zeichnungen näher erläutert. Dabei zeigen:
- Fig. 1: eine erfindungsgemäße Klappvorrichtung in einer Explosionszeichnung,
- Fig. 2: eine Anordnung mit mehreren Klappvorrichtungen im zusammengebauten Zustand mit einer Ansteue- rung durch einen Aktor,
- Fig. 3: einen Anlenkhebel für eine gemäß Fig. 1 ausge- bildete Klappvorrichtung,
- Fig. 4: eine Drallklappe für eine gemäß Fig. 1 ausgebil- dete Klappvorrichtung,
- Fig. 5: eine Lagereinheit für eine Drallklappe,
- Fig. 6: eine Lagereinheit mit eingebauter Drallklappe,
- Fig. 7: eine Alternativlösung des Zusammenbaus einer Drallklappe mit einer Lagereinheit, und
- Fig. 8: eine Schnittansicht für eine Klappvorrichtung im zusammengebauten Zustand.

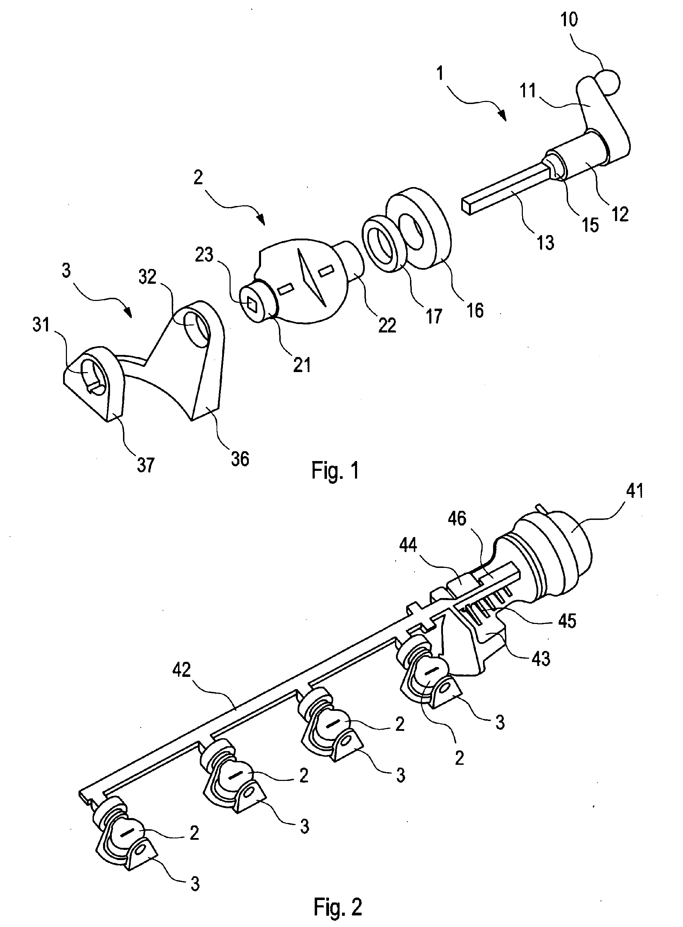

Fig. 1 zeigt in einer Explosionszeichnung die einzelnen Komponenten, die zum Zusammenbau einer Klappvorrichtung für eine Saugrohranlage benötigt werden. Diese Klappvorrichtung besteht im einzelnen aus einer in einer Lagereinheit 3 geführten Drallklappe 2 und einer sowohl zwei Lagerbuchsen 21, 22 der Drallklappe 2, als auch einen Lagerring 16 und einen Dichtring 17 axial durchdringende Haltestange 13. Diese Haltestange ist Teil einer Stellvorrichtung 1 mit einem quer zur Haltestange 13 befestigten Anlenkhebel 11, der über ein Kugelgelenk 10 mit einer Koppelstange 42 (siehe Fig. 2) verbunden ist.

Dabei ist der Anlenkhebel 11 der Stellvorrichtung 1 an seinem einen Ende über das Kugelgelenk 10 mit der Koppelstange 42 und am gegenüberliegenden Ende mit der Haltestange 13 verbunden. Diese Haltestange 13 ist an dem dem Anlenkhebel 11 zugewandten Ende von einer Hülse 12, die an ihrem freien Ende 15 einen kleineren Durchmesser aufweist, konzentrisch fest umschlossen. Die Haltestange 13 weist einen rechteckförmigen Querschnitt auf. Es sind aber auch andere einkantige oder mehrkantige Ausbildungen der Haltestange 13 möglich.

Die Lagerung der Haltestange 13 erfolgt durch den Lagerring 16, der ebenfalls wie der Dichtring 17 auf der Hülse 12 angeordnet ist.

Die Drallklappe 2 weist an gegenüberliegenden Seiten zwei zylinderförmige Lagerbuchsen 21 und 22 auf. Dabei weist die dem Anlenkhebel 11 fernere Lagerbuchse 21 eine dem Querschnitt der Haltestange 13 entsprechend geformte lochförmige Öffnung 23 auf, so dass über die Haltestange 13 eine axiale Drehung der Drallklappe 2 gesteuert werden kann.

Die Lagereinheit 3 weist zwei unterschiedlich lange Schenkel 36 und 37 auf, die über einen Bügel U-förmig miteinander verbunden sind. Dabei ist der dem Anlenkhebel 11 ferner liegende Schenkel 37 kürzer ausgebildet, als der dem Anlenkhebel 1 näher liegende Schenkel 36. Die beiden Schenkel 36, 37 weisen jeweils eine Bohrung 31, 32 auf, die jeweils an den Außendurchmesser der jeweiligen Lagerbuchse 21 und 22 der Drallklappe 2 angepasst sind. Die Achse der beiden Bohrungen 31 und 32 liegt dabei fluchtend zu der Achse der beider Lagerbuchsen 21, 22 der Drallklappe 2.

Fig. 2 zeigt die Drallklappen 2 im zusammengebauten Zustand mit einer Ansteuerung durch einen Aktor 41. Dabei hat es sich als vorteilhaft erwiesen, dass es sich bei dem Aktor 41 um eine Unterdruckdose handelt. Jedoch können auch weitere Arten von Aktoren eingesetzt werden. Die einzelnen Drallklappen 2 sind über Kugelgelenke mit einer Koppelstange 42 verbunden. Die Koppelstange 42 ist mittels eines Verrastelements 44 in einer Stufe 45 eines Befestigungsarms 43 angeordnet. Weiterhin steht das Verrastelement 44 mit einer Aktorwelle 46 in Verbindung.

Die Steuerung der Drallklappen 2, mittels des Aktors 41 erfolgt dadurch, dass die Aktorwelle 46 durch den Aktor 41 axial bewegt wird. Diese Bewegung überträgt sich über das Verrastelement 44 auf die Koppelstange 42. Dabei wird das Verrastelement 44 der Koppelstange 42 in einer weiteren Stufe45 des Befestigungsarms 43 angeordnet. Über die sich in der Koppelstange 42 befindlichen Kugelgelenke wird die Bewegung über die Haltestange 13 des Anlenkhebels 11 an die jeweiligen Drallklappen 2 übertragen.

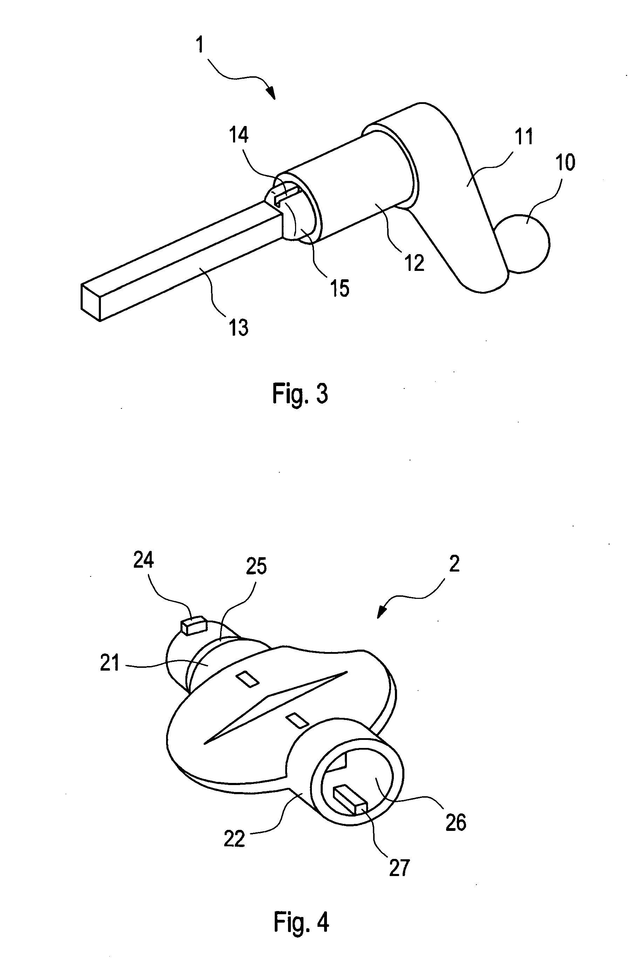

Die Fig. 3 und 4 zeigen jeweils eine perspektive Ansicht einer Stellvorrichtung 1 und einer Drallklappe 2. Die Fig. 3 zeigt die Haltestange 13, dessen dem Anlenkhebel 11 zugewandtes Ende von einer konzentrisch geführten Hülse 12 umschlossen ist, wobei die Hülse 12 an ihrem freien Ende 15 einen kleineren Durchmesser aufweist. Das freie Ende 15 der Hülse 12 weist weiterhin eine axial ausgerichtete nutartige Aussparung 14 auf.

Es ist aber auch durchaus eine Ausführung mit mehr als einer Hülse, mit unterschiedlichen Durchmessern der jeweiligen Hülsen, vorstellbar, die die Haltestange 13 umschließen. Die dem Anlenkhebel 11 fernere Hülse würde dann die Aussparung 14 beinhalten.

Ein zur axialen Aussparung 14 formschlüssig geformter Ansatz 27 befindet sich innerhalb der Bohrung 26 der zum Anlenkhebel 11 näher liegenden Lagerbuchse 22, die eine kreisförmige Bohrung 26 aufweist. Die Form dieser Bohrung 26 ist dabei derart gewählt, dass die dem Anlenkhebel 11 näher liegende Lagerbuchse 22 formschlüssig in die Hülse 15 des Anlenkhebels 11 eingeführt werden kann. Hierzu muss aber ebenfalls der Ansatz 27 in die Aussparung 14 des Anlenkhebels 11 formschlüssig eingeführt werden. Über den Ansatz 27 und die Aussparung 14 wird somit neben einer axialen Fixierung auch eine rotatorische Ansteuerung der Drallklappe 2 ermöglicht.

Weiterhin weist die Drallklappe 2 an der dem Anlenkhebel 11 ferner liegenden Lagerbuchse 21 einen radial vorspringenden Ansatz 24 und einen Flansch 25 auf, die zur axialen Fixierung der Drallklappe 2 in der Lagereinheit 3 dienen.

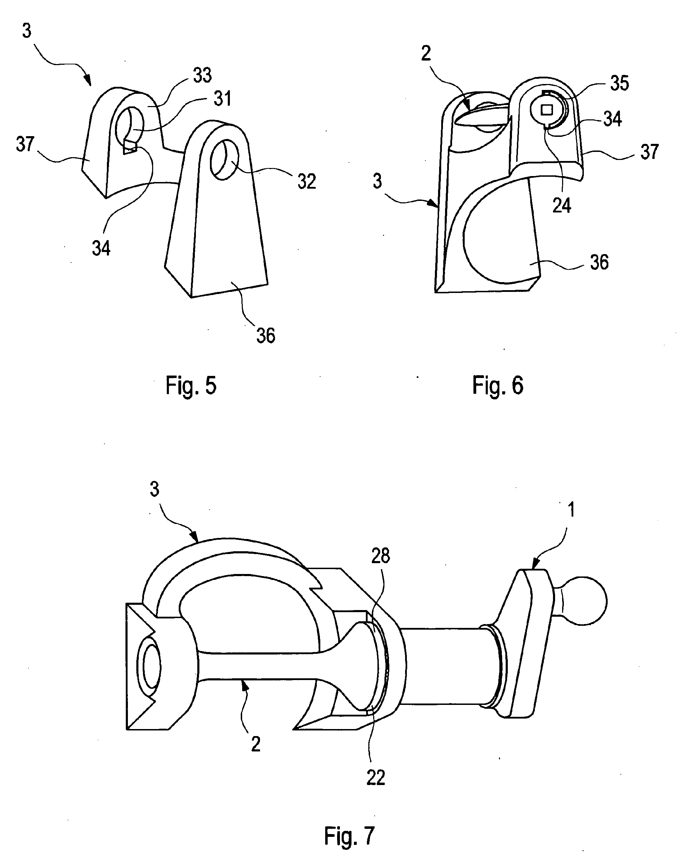

Die Fig. 5 und 6 zeigen ein erstes Ausführungsbeispiel für den Einbau der Drallklappe 2 in eine Lagereinheit 3, bei der eine axiale Fixierung der Drallklappe 2 sichergestellt ist. Der dem Anlenkhebel 11 ferner liegende Schenkel 37 der Lagereinheit 3 weist dabei auf der Unterseite der zum Anlenkhebel 11 ferner liegenden Bohrung 31 eine axiale Aussparung 34 auf. Weiterhin weist der dem Anlenkhebel 11 ferner liegende Schenkel 37 eine um die Bohrung 31 verlaufende Vertiefung 33 der zur Drallklappe 2 gerichteten Schenkeloberfläche auf. Im eingebauten Zustand taucht der Flansch 25 der Drallklappe 2 in die Vertiefung 33 der Schenkeloberfläche ein.

Der Einbau der Drallklappe 2 in die Lagereinheit 3 erfolgt dabei in der Weise, dass die Drallklappe 2 axial solange gedreht wird, bis der an der Lagerbuchse 21 vorgesehene Ansatz 24 durch die Aussparung 34 im Schenkel 37 der Lagereinheit 3 eingeführt werden kann. Nachdem der Ansatz 24 durch die Aussparung 34 eingeführt wurde, wird die Drallklappe 2 axial um 180° gedreht. Da im Betrieb der Brennkraftmaschine nur eine maximale axiale Drehung der Drallklappe 2 von 90° erreicht wird, ist gewährleistet, dass die Drallklappe 2 axial in der Lagereinheit 3 fixiert ist.

Weiterhin weist der dem Anlenkhebel 11 fernere Schenkel 37 der Lagereinheit 3 eine weitere Vertiefung 35 in der Schenkeloberfläche auf, mit der der Ansatz 24 der Drallklappe 2 in Kontakt steht. Die Vertiefung 35 befindet sich dabei in der der Drallklappe 2 abgewandten Oberfläche des Schenkels 37. Im normalen Betrieb der Brennkraftmaschine entsteht aufgrund einer Drehung der Drallklappe 2 eine Reibung zwischen der Vertiefung 35 der Lagereinheit 3 und dem Ansatz 24 der Drallklappe 2 und/oder der Vertiefung 33 der Lagereinheit 3 und dem Flansch 25 an der Lagerbuchse 21 der Drallklappe 2. Um die auftretende Reibung zwischen den jeweiligen Komponenten zu minimieren, weisen die betreffenden Schenkeloberflächen der Lagereinheit 3 eine geglättete Struktur auf. Dadurch entstehen auch die im Vergleich zur restlichen Schenkeloberfläche der Lagereinheit 3 auftretenden Vertiefungen 33 und 35.

Eine weitere Alternativlösung für den Zusammenbau einer Drallklappe 2 mit einer Lagereinheit 3, bei der eine axiale Fixierung der Drallklappe 2 sichergestellt ist, zeigt Fig. 7. Zusätzlich zu dem an der dem Anlenkhebel 11 ferner liegenden Lagerbuchse 21 vorgesehenen Flansch 25 weist die Drallklappe 2 bei dieser Ausführungsform an der dem Anlenkhebel 11 näher liegenden Lagerbuchse 22 einen weiteren Flansch 28 auf. Diese beiden Flansche 25 und 28 verhindern eine axiale Bewegung der Drallklappe 2, da deren jeweiliger Durchmesser größer ist, als der jeweilige Bohrungsdurchmesser 31 und 32 der Lagereinheit 3.

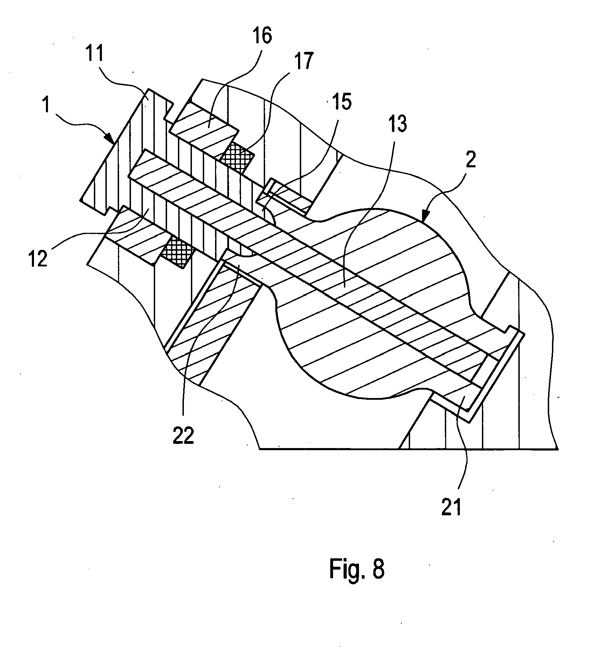

Fig. 8 zeigt eine Schnittansicht einer Stellvorrichtung 1 mit dem durch die Hülse 12 umschlossenen Abschnitts der Haltestange 3 im montierten Zustande der Drallklappe 2. Wie aus der Fig. 8 zu entnehmen ist, wird die Haltestange 13, von der Hülse 12 des Anlenkhebels 11 umschlossen. Dabei ist in diesem Ausführungsbeispiel der Anlenkhebel 11 und die Hülse 12 als einstückiges Bauelement ausgebildet. Dabei durchdringt das freie Ende der Haltestange 13 die dem Anlenkhebel 11 ferner liegende Lagerbuchse 21 der Drallklappe 2 nicht vollständig. Weiterhin ist ersichtlich, dass die dem Anlenkhebel 11 näher liegende Lagerbuchse 22 das freie Ende 15 der Hülse 12 vollständig umfasst, und dass der Durchmesser der kreisförmigen Bohrung 26 der Lagerbuchse 22 sich in axialer Richtung bis auf den Durchmesser der Haltestange 13 reduziert.

## Patentansprüche

1. Saugrohranlage für eine Brennkraftmaschine mit mindestens einem Anlenkhebel (11), der an einem Ende über ein quer zur Achse des Anlenkhebels ausgerichtetes Kugelgelenk mit einer Koppelstange (42) verbunden ist, und an dessen freiem Ende eine senkrecht zur Achse des Anlenkhebels ausgerichtete Haltestange (13) für eine Drallklappe (2) vorgesehen ist, die zwei beidseitig der Drallklappe (2) angeformte jeweils in Bohrungen (31, 32) einer Lagereinheit (3) geführte Lagerbuchsen (21, 22) axial durchdringt,
**dadurch gekennzeichnet,**
- **dass** das dem Anlenkhebel (11) zugewandte Ende der Haltestange (13) von mindestens einer Hülse (12) umschlossen ist,
- **dass** diese Hülse (12) eine axiale Aussparung (14) aufweist, in die ein in der zugewandten Lagerbuchse (22) der Drallklappe (2) entsprechend geformter axialer Ansatz (2/9 formschlüssig eingreift,
- **dass** mindestens eine der beiden Lagerbuchsen (21, 22) der Drallklappe (2), bezogen auf die jeweilige Bohrung (31, 32) der Lagereinheit (3) derart geformt ist, dass eine axiale Fixierung der Drallklappe (2) sichergestellt ist.

2. Vorrichtung nach Anspruch 1,
**dadurch gekennzeichnet,**
**dass** die Drallklappe (2) an mindestens einer Lagerbuchse (21, 22) einen Flansch (25) aufweist, dessen Durchmesser größer ist, als der Durchmesser der jeweiligen Bohrung (31, 32) der Lagereinheit (3).

3. Vorrichtung nach Anspruch 1 oder 2,
**dadurch gekennzeichnet,**
**dass** die Drallklappe (2) auf mindestens einer Lagerbuchse (21) einen radial vorspringenden Ansatz (24), und die jeweilige Bohrung (31) der Lagereinheit (3) eine dem Ansatz entsprechend geformte Aussparung (34) aufweist.

4. Vorrichtung nach einem der vorhergehenden Ansprüche,
**dadurch gekennzeichnet,**
**dass** sich innerhalb einer Bohrung (26) einer zum Anlenkhebel (11) näher liegenden Lagerbuchse (22) der Drallklappe (2) ein stegartiger, axial ausgerichteter Ansatz (27) vorgesehen ist.

5. Vorrichtung nach einem der vorhergehenden Ansprüche,
**dadurch gekennzeichnet,**
**dass** die Drallklappe (2) an gegenüber liegenden Seiten je eine Lagerbuchse (21, 22) aufweist.

6. Vorrichtung nach Anspruch 5,
**dadurch gekennzeichnet,**
**dass** mindestens eine Lagerbuchse (21) der Drallklappe (2) eine dem Querschnitt der Haltestange (13) entsprechend geformte lochförmige Öffnung (23) aufweist.

7. Vorrichtung nach Anspruch 5,
**dadurch gekennzeichnet,**
**dass** mindestens eine Lagerbuchse (22) der Drallklappe (2) eine kreisförmige Bohrung (26) aufweist, die sich in axialer Richtung konisch verjüngt und letztendlich einen der Haltestange (13) entsprechenden Querschnitt aufweist.

8. Vorrichtung nach einem der vorgehenden Ansprüche,
**dadurch gekennzeichnet,**
**dass** auf dem Anlenkhebel (12) zugewandten Ende der Hülse (12) jeweils ein Lagerring (16) und jeweils ein Dichtungsring (17) angeordnet sind.

9. Vorrichtung nach einem der vorgehenden Ansprüche,
**dadurch gekennzeichnet,**
**dass** die Haltestange (13) einen einkantigen oder mehrkantigen Querschnitt aufweist.

10. Vorrichtung nach einem der vorhergehenden Ansprüche,
**dadurch gekennzeichnet,**
**dass** die Kontaktflächen (33, 35) zwischen der Lagereinheit (3) und der zum Anlenkhebel (1) ferneren Lagerbuchse (25) eine geglättete Oberflächenstruktur aufweisen.

## Claims

1. An intake manifold system for an internal combustion engine having at least one link lever (11) that is connected on one end to a coupling rod (42) by means of a ball-and-socket joint that is directed transverse to the axis of the link lever and on the free end of which lever, a stay bar (13) is provided for a swirl flap (2), which stay bar is perpendicular to the axis of the link lever, which stay bar axially penetrates two bearing bushes (21, 22) guided in the bore holes (31, 32) of a bearing unit (3), which bore holes are formed on both sides of the swirl flap (2),
**characterised in that**
- the end of the stay bar (13) that is directed to the link lever (11) is surrounded by at least one sleeve (12),
- this sleeve (12) has an axial recess (14) with which one of the axial lugs (2/9), which is correspondingly formed in the opposite bearing bush (22) of the swirl flap (2), engages in a form-fitting manner,
- at least one of the two bearing bushes (21, 22) of the swirl flap (2) is with respect to the respective bore holes (31, 32) of the bearing unit (3) is formed in such a manner that an axial fixing of the swirl flap (2) is ensured.

2. The device as specified in claim 1,
**characterised in that**
the swirl flap (2) has a flange (25) on at least one bearing bush (21, 22), the diameter of which flange is greater than the diameter of each of the bore holes (31, 32) of the bearing unit (3).

3. The device as specified in claim 1 or claim 2,
**characterised in that**
the swirl flap (2) has a radially protruding lug (24) on at least one bearing bush (21), and the corresponding bore hole (31) of the bearing unit (3) has a recess (34) that is correspondingly formed to the lug.

4. The device as specified in any one of the preceding claims,
**characterised in that**
a bridge-like, axially directed lug (27) is provided inside a bore hole (26) of a bearing bush (22) of the swirl flap (2), which bearing bush is closer to the link lever (11).

5. The device as specified in any one of the preceding claims,
**characterised in that**
the swirl flap (2) has on each of its opposite sides a bearing bush (21, 22).

6. The device as specified in claim 5,
**characterised in that**
at least one bearing bush (21) of the swirl flap (2) has a hole-like opening (23) correspondingly formed to the cross section of the stay bar (13).

7. The device as specified in claim 5,
**characterised in that**
at least one bearing bush (22) of the swirl flap (2) has circular bore hole (26) that conically tapers in the axial direction and that ultimately has a cross section that corresponds to the stay bar (13).

8. The device as specified in any one of the preceding claims,
**characterised in that**
a bearing ring (16) and a sealing ring (17) are arranged on the end of the sleeve (12) opposite the link lever (12).

9. The device as specified in any one of the preceding claims,
**characterised in that**
the stay bar (13) has a one-edged or multi-edged cross section.

10. The device as specified in any one of the preceding claims,
**characterised in that**
the contact surfaces (33, 35) between the bearing unit (3) and the bearing bush (25) that is more distant to the link lever (1) have a smoothed surface structure.

## Revendications

1. Système collecteur d'admission pour moteur à combustion interne comportant au moins un levier d'articulation (11), qui est relié à une extrémité par l'intermédiaire d'une articulation sphérique orientée transversalement à l'axe du levier d'articulation à une tige de couplage (42), et est pourvu à son extrémité libre d'une tige de retenue (13) d'un clapet de torsion (2), orientée perpendiculairement à l'axe du levier d'articulation, qui traverse axialement deux coussinets de palier (21, 22) façonnés des deux côtés du clapet de torsion (2), guidés respectivement dans des alésages (31, 32) d'une unité de palier (3),
**caractérisé en ce que**
- l'extrémité de la tige de retenue (13) tournée vers le levier d'articulation (11) est entourée par au moins un manchon (12),
- ce manchon (12) présente une cavité axiale (14), dans laquelle un prolongement (27) axial façonné de manière correspondante dans le coussinet de palier (22) afférent du clapet de torsion (2) vient en prise par conjonction de forme,
- au moins un des deux coussinets de palier (21, 22) du clapet de torsion (2), par rapport à l'alésage respectif (31, 32) de l'unité de palier (3) est façonné de telle sorte qu'une fixation axiale du clapet de torsion (2) soit assurée.

2. Dispositif selon la revendication 1,
**caractérisé en ce que**
le clapet de torsion (2) présente une bride (25) sur au moins un coussinet de palier (21, 22), dont le diamètre est plus grand que le diamètre de l'alésage respectif (31, 32) de l'unité de palier (3).

3. Dispositif slen la revendication 1 ou 2,
**caractérisé en ce que**
le clapet de torsion (2) présente sur au moins un coussinet de palier (21) un prolongement (24) dépassant radialement et l'alésage respectif (31) de l'unité de palier (3) présente un cavité (34) façonnée de manière à correspondre au prolongement.

4. Dispositif selon une des revendications précédentes,
**caractérisé en ce que**
à l'intérieur d'un alésage (26) d'un coussinet de palier (22) du clapet de torsion (2) situé plus près du levier d'articulation (11), un prolongement (27) de type gradin, orienté axialement est prévu.

5. Dispositif selon une des revendications précédentes,
**caractérisé en ce que**
le clapet de torsion (2) présente respectivement sur les côtés situés en vis-à-vis un coussinet de palier (21, 22).

6. Dispositif selon la revendication 5,
**caractérisé en ce que**
au moins un coussinet de palier (21) du clapet de torsion (2) présente une ouverture (23) en forme de trou façonnée de manière à correspondre à la section transversale de la tige de retenue (13).

7. Dispositif selon la revendication 5,
**caractérisé en ce que**
au moins un coussinet de palier (22) du clapet de torsion (2) présente un alésage (26) en forme de croix, qui s'amincit coniquement dans la direction axiale et présente à l'extrémité une section transversale correspondant à la tige de retenue (13).

8. Dispositif selon une des revendications précédentes,
**caractérisé en ce que**
sur l'extrémité tournée vers le levier d'articulation (12) du manchon (12), respectivement une bague de palier (16) et respectivement une bague d'étanchéité (17) sont disposées.

9. Dispositif selon une des revendications précédentes,
**caractérisé en ce que**
la tige de retenue (13) présente une section transversale à un tranchant ou à plusieurs tranchants.

10. Dispositif selon une des revendications précédentes,
**caractérisé en ce que**
les surfaces de contact (33, 35) entre l'unité de palier (3) et le coussinet de palier (25) plus éloigné du levier d'articulation (1) présentent une surface de structure lissée.
